# EUROPÄISCHE PATENTSCHRIFT

(11) **EP 1 908 986 B1**
(45) Veröffentlichungstag und Bekanntmachung des Hinweises auf die Patenterteilung: **28.09.2011**
(21) Anmeldenummer: 07019118.4
(22) Anmeldetag: 28.09.2007
(51) Int. Cl.: F16F 13/14

(54) **Elastische Lagerbuchse mit hydraulischer Dämpfung**
Elastic bearing sleeve with hydraulic damping
Coussinet élastique avec amortissement hydraulique

(30) Priorität: 07.10.2006 DE 102006047446
(43) Veröffentlichungstag der Anmeldung: 09.04.2008
(73) Patentinhaber: Jörn GmbH, 71336 Waiblingen (DE)
(72) Erfinder: Seck, Gerhard, 73630 Remshalden (DE); Zawadzki, Bernd, 71409 Schwaikheim (DE); Sprang, Rüdiger, 53125 Bonn (DE)
(74) Vertreter: Liebl, Thomas

(56) Entgegenhaltungen:
- EP-A1- 0 486 369
- EP-A1- 0 645 556
- DE-A1- 3 617 787
- DE-A1- 4 320 643
- JP-A- 6 042 577
- JP-A- 6 346 943

## Beschreibung

Die Erfindung betrifft eine elastische Lagerbuchse mit hydraulischer Dämpfung insbesondere für Lagerungen in einem Kraftfahrzeug oder als Maschinenlagerung nach dem Oberbegriff des Anspruchs 1.

Bekannte gattungsgemäße elastische Lagerbuchsen mit hydraulischer Dämpfung (DE 36 17 787 C2; DE 36 31 620 A1) bestehen aus einem Innenteil zur Verbindung mit einem ersten zu lagernden Bauteil und einem Außenrohr sowie aus einem Elastomerkörper zwischen dem Innenteil und dem Außenrohr. Zudem weisen solche Lagerbuchsen zwei radial gegenüberliegende, mit hydraulischer Flüssigkeit gefüllte Arbeitskammern auf, die durch zugeordnete Aussparungen im Außenrohr und im Elastomerkörper sowie durch eine flüssigkeitsdicht abschließende Außenhülse gebildet sind. Die zwei Arbeitskammern sind durch einen Strömungskanal miteinander verbunden.

Bei einer solchen elastischen Lagerbuchse mit hydraulischer Dämpfung wird bei radialer oszilierender Ein- und Ausfederung eine Änderung des Volumens mit einer Änderung des Drucks in den Arbeitskammern erzeugt, die von der Einfederung und der Beulfähigkeit oder sog. Volumensteifigkeit der Kammerbegrenzungen abhängig ist. Durch eine solche Volumenänderung wird Flüssigkeit von der einen Arbeitskammer durch den Strömungskanal in die andere Arbeitskammer und zurück verdrängt. Das gewünschte Dämpfungs- oder Tilgungsverhalten ergibt sich durch die Eigenschwingung der Flüssigkeitsmasse im Strömungskanal, welche gegen die Volumensteifigkeit schwingt. Das Dämpfungsverhalten ist dabei abhängig von Eintritts-, Umlenk- und Reibungsverlusten im Strömungskanal. Erzielbar sind mechanische Verlustwinkel bis zu 60°, je nach Amplitude im Frequenzbereich von im allgemeinen größer/gleich 5 Hz. Hohe Verlustwinkel bei gewünscht niedrigen Frequenzen sind bauartbedingt regelmäßig dann erreichbar, wenn die schwingende Flüssigkeitsmasse im Strömungskanal möglichst groß ist, was durch einen möglichst langen Strömungskanal zu erreichen ist.

Bei den bekannten Lagern wird dies durch eine zum Teil mehrfach umlaufende Strömungskanalführung an der Buchsenmantelfläche erreicht. Diese Kanalführung erfolgt in zusätzlichen Bauteilen wie Kanalträgern oder Einsätzen. Dies führt zu einem komplexen Lageraufbau mit relativ hohen Herstellkosten.

Aufgabe der Erfindung ist es demgegenüber, eine gattungsgemäße elastische Lagerbuchse mit hydraulischer Dämpfung so weiterzubilden, dass sie bei einfachem Aufbau und guter Funktion kostengünstig herstellbar ist und einen langen Strömungskanal aufweist.

Diese Aufgabe wird mit den Merkmalen des Anspruchs 1 gelöst.

Gemäß Anspruch 1 ist auf dem Außenrohr radial außen eine Elastomerschicht aufgebracht, in der der Strömungskanal mit seinem Kanalboden und den Kanalseitenwänden sowie eine Übergangskonturkammer eingeformt sind, wobei der Strömungskanal und die Übergangskonturkammer radial außen von der Außenhülse flüssigkeitsdicht begrenzt sind.

Der Strömungskanal besteht aus zwei Kanalteilen, von denen jeweils ein Kanalteil seitlich neben den Arbeitskammern in einer Querebene verläuft dergestalt, dass der erste Teilkanal mit der ersten Arbeitskammer über eine erste seitliche Kammerausgangsöffnung verbunden ist, neben der ersten Arbeitskammer und der zweiten Arbeitskammer in Umfangsrichtung vorbeiläuft und in die Übergangskonturkammer einmündet. Entsprechend ist der zweite Teilkanal mit der zweiten Arbeitskammer über eine zweite seitliche Kammerausgangsöffnung verbunden und läuft neben der zweiten Arbeitskammer und der ersten Arbeitskammer in der entgegengesetzten Umfangsrichtung vorbei, wonach er ebenfalls in die Übergangskonturkammer einmündet. Über diese Übergangskonturkammer ist die Strömungsverbindung der axial gegenüberliegenden Teilkanäle hergestellt.

Die erfindungsgemäße elastische Buchse enthält einen gewünscht langen Strömungskanal und ist einfach aufgebaut, sowie einfach und kostengünstig zu fertigen, da keine zusätzlichen aufwendigen Bauteile, wie z. B. Kanalträger erforderlich sind. Das Lagerteil bestehend aus dem Innenteil, dem Außenrohr und dem Elastomermaterial ist bei der Fertigung einfach in vertikaler Richtung aus einer horizontal geteilten Form zu entformen, da beim Strömungskanalverlauf keine Hinterschneidungen vorliegen und auch Strömungsführungskonturen in der Übergangskonturkammer einfach entformbar gestaltet werden können, wobei zusätzlich eine die Strömung günstig beeinflussende Geometrie einformbar ist.

Gemäß einer vorteilhaften Weiterbildung nach Anspruch 2 hat die Übergangskonturkammer einen größeren Querschnitt als die Teilkanäle, so dass diese gegenüber den Teilkanälen eine Erweiterung darstellt. Dadurch wird vorteilhaft die schwingende Flüssigkeitsmasse zur Erzielung eines geeigneten Dämpfungsverhaltens weiter vergrößert. Zudem kann in der Übergangskontur eine Strömungsführungskontur zwischen den einmündenden Teilkanälen ausgebildet werden, mit der die Strömung der Flüssigkeit im Sinne eines geeigneten Dämpfungsverhaltens positiv beeinflussbar ist.

Für eine einfache Entformung bei der Herstellung ist es zweckmäßig, die Übergangskonturkammer zumindest teilweise als Zylinderabschnitt auszubilden, wobei die Abschnittfläche in der Entformrichtung liegt.

Bei einem bevorzugten Einbau nach Anspruch 4, beispielsweise als Aggregatlager, wird die Lagerbuchse in ein Aufnahmeauge des zweiten zu lagernden Bauteils, beispielsweise eines Fahrerhauses eines Lkw, mit etwa horizontaler Buchsenachse und vertikal übereinanderliegenden Arbeitskammern eingepresst. Eine so eingebaute Lagerbuchse ist dann für eine gedämpfte elastische Abstützung vertikaler Belastungen geeignet.

Vorteilhaft kann die obere Begrenzung (bezogen auf die vorstehend genannte Einbaulage) der Stromführungskontur in der Übergangskonturkammer einen strömungsoptimierten Kurvenverlauf zwischen der Einmündung des ersten Teilkanals und des zweiten Teilkanals aufweisen. Dabei ist die Entformbarkeit gewährleistet.

Zudem können im unteren Bereich (bezogen auf die vorstehend genannte Einbaulage) der Übergangskonturkammer etwa unter der Einmündung des zweiten Teilkanals vertikal ausgerichtete Längslamellen eingeformt sein, deren obere Verbindungslinie einer unteren Begrenzung der Stromführungskontur gegebenenfalls in Verbindung mit dem vorstehend genannten strömungsoptimierten Kurvenverlauf der oberen Begrenzung entspricht. Durch Verwendung von Längslamellen ist damit die Nachbildung eines geeigneten Stromführungskanals möglich, wobei durch die vertikale Ausrichtung der Längslamellen die Entformbarkeit gewährleistet ist. Gegebenenfalls können die Längslamellen auch etwas schräg gestellt sein, insbesondere in Strömungsrichtung, wodurch ebenfalls noch die Entformbarkeit gegeben ist.

Alternativ oder zusätzlich können in der Übergangskonturkammer ein oder mehrere strömungsleitende Konturelemente nachträglich nach der Entformung formschlüssig und/oder kraftschlüssig angebracht werden. Damit ist eine weitere Anpassung und Abstimmung an konkrete Gegebenheiten möglich.

Als weitere Maßnahme zur Beeinflussung der Strömung können nach Anspruch 8 im unteren Bereich der Übergangskonturkammer (bezogen auf die oben genannte Einbaulage) etwa unter der Einmündung des zweiten Teilkanals Vertiefungen eingeformt sein, um hier ein "Totwassergebiet" zu erzeugen oder zu verstärken. Für die Vertiefungen können unterschiedliche Geometrien gewählt werden.

In einer weiteren Ausgestaltung nach Anspruch 9 sind am Innenteil mit Elastomermaterial überzogene Anschläge angeformt, die radial in die Arbeitskammern unter Berücksichtigung eines freien Federwegs einragen. Bei starken Ein- oder Ausfederungen kommen diese Anschläge an der Innenseite der Außenhülse zur Anlage und stützen sich darüber im Aufnahmeauge ab.

Für eine gute Tragfunktion ist das Innenteil etwa entsprechend einem Rohr oder einem Konuslager im Querschnitt nach unten konisch verjüngt ausgebildet. Zudem ist das Innenteil aus Kunststoff mit einer zentralen Bohrung zur Aufnahme einer Schwenkachse hergestellt. Ein solches Lager ist u. a. gut geeignet zur Abstützung des Fahrerhauses eines Lkw.

Anhand einer Zeichnung wird die Erfindung näher erläutert.

Es zeigen:
- Fig. 1: einen Querschnitt durch eine elastische Lagerbuchse mit hydraulischer Dämpfung,
- Fig. 2: einen entsprechenden Längsschnitt,
- Fig. 3: eine perspektivische Ansicht der Lagerbuchse,
- Fig. 4 bis 7: jeweils eine Draufsicht auf eine Übergangskonturkammer mit unterschiedlichen Strömungsleitmaßnahmen,
- Fig. 8: unterschiedliche Geometrien für Vertiefungen bzw. Lamellenausführungen in der Übergangskonturkammer,
- Fig. 9: eine Detailansicht eines strömungsleitenden Konturelements, und
- Fig. 10: eine perspektivische Ansicht einer Lagerbuchse mit dem Konturelement nach Fig. 9.

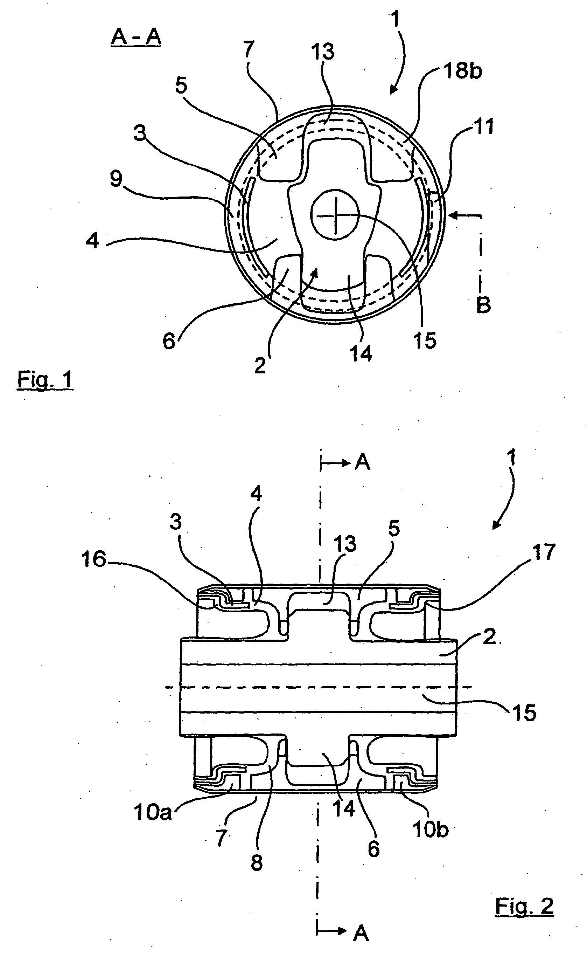

In den Fig. 1 bis 3 ist eine elastische Lagerbuchse 1 dargestellt, die aus einem Innenteil 2, einem Außenrohr 3 und einem Elastomerkörper 4 zwischen dem Innenteil 2 und dem Außenrohr 3 besteht.

Zudem sind zwei radial gegenüberliegende, mit hydraulischer Flüssigkeit gefüllte Arbeitskammern ausgebildet (obere Arbeitskammer 5 und untere Arbeitskammer 6), die durch zugeordnete Aussparungen im Außenrohr 3 sowie im Elastomerkörper 4 und durch eine flüssigkeitsdicht abschließende Außenhülse 7 hergestellt sind. Wie aus den Fig. 1 und 2 ersichtlich, sind damit die Arbeitskammern 5, 6 bezüglich des Elastomermaterials an den jeweiligen Kammerböden von den beidseitigen stark dimensionierten Elastomerpaketen und in den Seitenbereichen von zur Lagermitte eingezogenen dünnwandigeren Elastomerwänden 8 begrenzt. Bedingt durch die Ausnehmungen am Außenrohr 3 im Bereich der Arbeitskammern 5, 6 sind in Fig. 1 lediglich gegenüberliegende ringförmig umlaufende Seitenabschnitte des Außenrohrs 3 und entsprechen in Fig. 2 nur die eingeformten umlaufenden Ringbereiche des Außenrohrs 3 sichtbar.

Auf dem Außenrohr 3 ist radial außen eine Elastomerschicht 9 aufgebracht, in der ein Strömungskanal 10 mit seinen beiden Teilkanälen 10a, 10b sowie eine Übergangskonturkammer 11 eingeformt sind, wobei die Teilkanäle 10a, 10b und die Übergangskonturkammer 11 radial außen von der Außenhülse 7 flüssigkeitsdicht begrenzt sind.

Am Innenteil 2 sind in einem axial mittleren Bereich gegenüberliegende, mit Elastomermaterial 13 überzogene Anschläge 14 angeformt, die jeweils radial in die Arbeitskammern 5, 6 einragen. Das Innenteil 2 ist im Querschnitt nach unten konisch verjüngt ausgebildet. Es ist vorzugsweise aus Kunststoff hergestellt mit einer zentralen Bohrung 15 zur Aufnahme einer metallischen Schwenkachse.

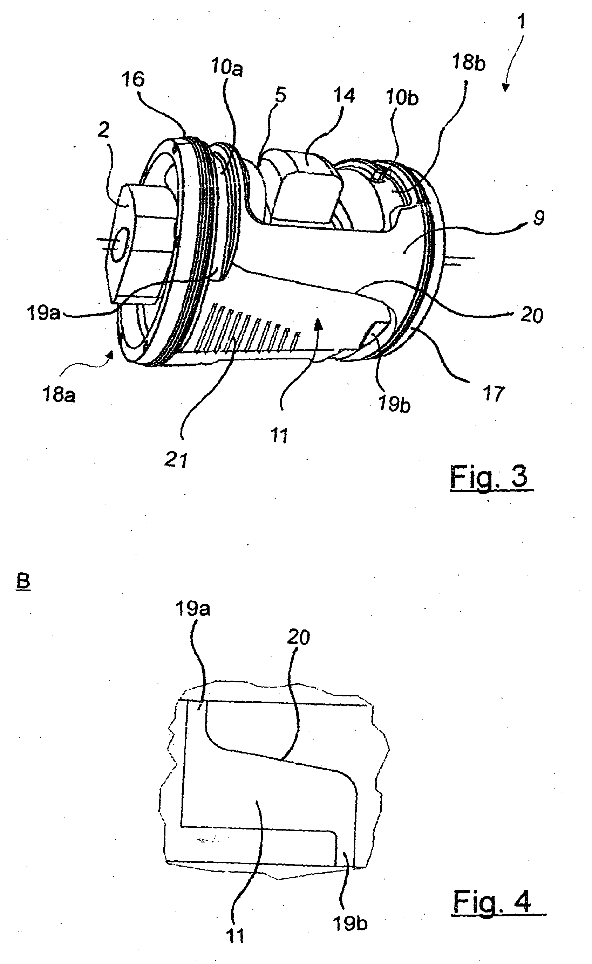

In Fig. 3 ist eine perspektivische Ansicht der elastischen Lagerbuchse 1, jedoch ohne die Außenhülse 7 gezeigt. Es sind hier deutlich das Innenteil 2, die obere Arbeitskammer 5 mit dem oberen Anschlag 14, sowie die stirnseitig umlaufenden Ringbereiche 16 und 17 mit den Dichtlippen für die Außenhülse 7 erkennbar. Zudem ist die Elastomerschicht 9 zu ersehen, in die die Teilkanäle 10a, 10b und die Übergangskonturkammer 11 eingeformt sind.

Die Teilkanäle 10a und 10b verlaufen jeweils seitlich neben den Arbeitskammern 5 und 6. Dabei ist der Teilkanal 10b mit der oberen Arbeitskammer 5 über eine seitliche Kammerausgangsöffnung 18b verbunden. Von dort läuft der Teilkanal 10b an der oberen Arbeitskammer 5 und der unteren Arbeitskammer 6 in Umfangsrichtung vorbei und mündet an der Einmündung 19b in die Übergangskonturkammer 11.

Entsprechend beginnt der andere Teilkanal 10a an einer (in Fig. 3 nicht zu ersehenden) Kammerausgangsöffnung 18a der unteren Arbeitskammer 6 und verläuft neben der unteren Arbeitskammer 6 und der oberen Arbeitskammer 5 in der entgegengesetzten Umfangsrichtung bis zur Einmündung 19a in die Überganskonturkammer 11. In der Übergangskonturkammer 11 ist die Strömungsverbindung zwischen den Teilkanälen 10a, 10b bzw. deren Einmündungen 19a, 19b hergestellt.

In den Fig. 3 bis 10 sind unterschiedliche Ausbildungen der Übergangskonturkammer und der darin enthaltene strömungsbeeinflussende Konturen gezeigt: In allen gezeigten Ausführungen einer Übergangskonturkammer 11 ist diese zumindest teilweise als Zylinderabschnitt ausgebildet mit einer vertikalstehenden Abschnittsfläche. Die obere Begrenzung 20 der Stromführungskontur hat in allen Ausführungsformen einen strömungsoptimierten Kurvenverlauf zwischen den Einmündungen 19a und 19b.

In der Ausführungsform nach Fig. 4 sind keine weiteren strömungsführenden Maßnahmen mehr vorgesehen.

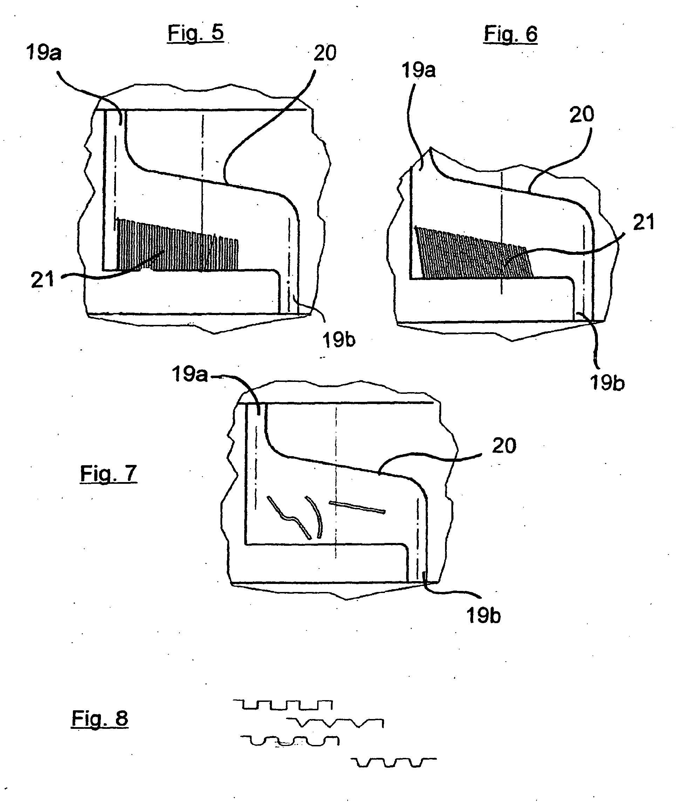

In den Ausführungen nach Fig. 3 und Fig. 5 sind dagegen im unteren Bereich der Übergangskonturkammer 11 unterhalb und seitlich zur Einmündung 19a vertikal ausgerichtete Längslamellen 21 angeformt, deren obere Verbindungslinie einer unteren Begrenzung der Stromführungskontur etwa parallel mitlaufend mit der oberen Begrenzung 20 entspricht. In der Ausführungsform nach Fig. 6 sind die Längslamellen 21 etwas schräg in Strömungsrichtung von der Einmündung 19b zur Einmündung 19a angestellt.

In Fig. 7 ist angedeutet, dass je nach den Gegebenheiten auch andere strömungsleitende Erhebungen und/oder Vertiefungen angebracht werden können, um den Strömungsverlauf zu optimieren. In Fig. 8 sind zudem im Querschnitt unterschiedliche Strukturen angegeben, die je nach Bedarf und Optimierung eingesetzt werden können.

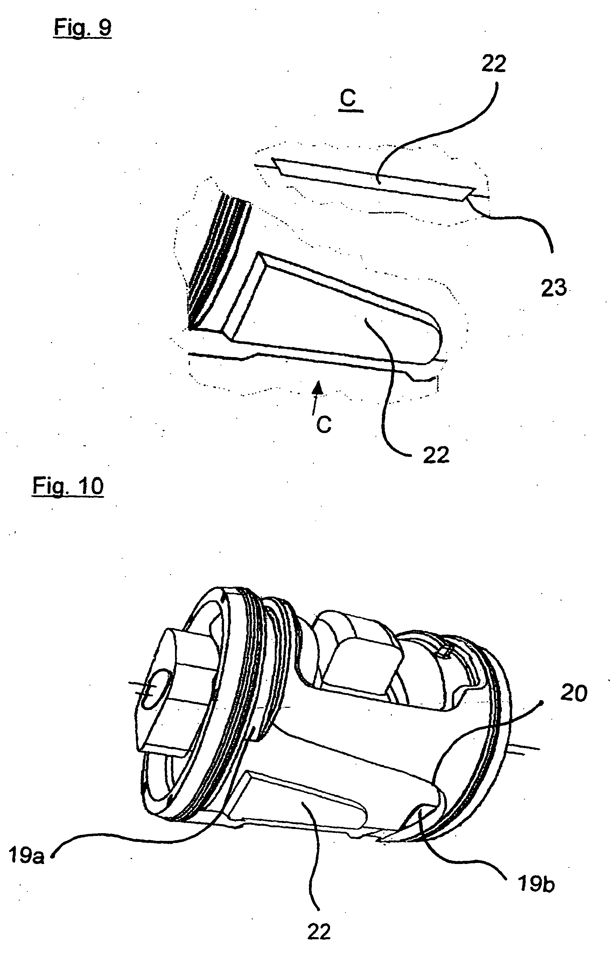

In der Ausführung gemäß Fig. 9 und 10 ist nachträglich nach der Entformung ein strömungsleitendes Konturelement formschlüssig in der Übergangskonturkammer 11 angebracht. Wie aus Fig. 9 ersichtlich ist dieses formschlüssig in Entformungsrichtung in eine Schwalbenschwanzführung 23 eingesteckt.

## Patentansprüche

1. Elastische Lagerbuchse mit hydraulischer Dämpfung
mit einem Innenteil (2) zur Verbindung mit einem ersten zu lagernden Bauteil und einem Außenrohr (3),
mit einem Elastomerkörper (4) zwischen dem Innenteil (2) und dem Außenrohr (3),
mit zwei, radial gegenüberliegenden, mit hydraulischer Flüssigkeit gefüllten Arbeitskammern (5, 6), die durch zugeordnete Aussparungen im Außenrohr (3) und im Elastomerkörper (4) sowie durch eine flüssigkeitsdicht abschließende Außenhülse (7) gebildet sind, und
mit einem Strömungskanal (10a, 10b, 11) zur Strömungsverbindung der zwei Arbeitskammern (5, 6),
**dadurch gekennzeichnet,**
**dass** auf dem Außenrohr (3) radial außen eine Elastomerschicht (9) aufgebracht ist, in der der Strömungskanal (10a, 10b) mit seinem Kanalboden und den Kanalseitenwänden sowie eine Übergangskonturkammer (11) eingeformt ist, wobei der Strömungskanal (10a, 10b) und die Übergangskonturkammer (11) radial außen von der Außenhülse (7) flüssigkeitsdicht begrenzt sind, und
**dass** der Strömungskanal aus zwei Teilkanälen (10a, 10b) besteht, von denen jeweils ein Teilkanal (10a, 10b) seitlich neben den Arbeitskammern (5, 6) in einer Querebene verläuft, dergestalt
**dass** der erste Teilkanal (10b) mit der ersten Arbeitskammer (5) über eine erste seitliche Kammerausgangsöffnung (18b) verbunden ist, neben der ersten Arbeitskammer (5) und der zweiten Arbeitskammer (6) in Umfangsrichtung vorbeiläuft und in die Übergangskonturkammer (11) einmündet, und
**dass** der zweite Teilkanal (10a) entsprechend mit der zweiten Arbeitskammer (6) über eine zweite seitliche Kammerausgangsöffnung (19a) verbunden ist, neben der zweiten Arbeitskammer (6) und der ersten Arbeitskammer (5) in der entgegengesetzten Umfangsrichtung vorbeiläuft und ebenfalls in die Übergangskonturkammer (11) einmündet, über die in Buchsenlängsrichtung eine Strömungsverbindung zwischen dem ersten Teilkanal (10b) und dem zweiten Teilkanal (10a) hergestellt ist.

2. Elastische Lagerbuchse nach Anspruch 1, **dadurch gekennzeichnet, dass** die Übergangskonturkammer (11) einen größeren Querschnitt als die Teilkanäle (10a, 10b) aufweist und gegenüber diesen eine Erweiterung darstellt, und
dass die Übergangskonturkammer (11) eine Strömungsführungskontur (20; 21; 22) zwischen den einmündenden Teilkanälen (10a, 10b) aufweist.

3. Elastische Lagerbuchse nach Anspruch 1 oder Anspruch 2, **dadurch gekennzeichnet, dass** die Übergangskonturkammer (11) als Zylinderausschnitt ausgebildet ist.

4. Elastische Lagerbuchse nach einem der Ansprüche 1 bis 3, **dadurch gekennzeichnet, dass** der Einbau der Lagerbuchse (1) durch Einpressen in ein Aufnahmeauge des zweiten zu lagernden Bauteils mit etwa horizontaler Buchsenachse und vertikal übereinanderliegenden Arbeitskammern (5, 6) erfolgt.

5. Elastische Lagerbuchse nach Anspruch 4, **dadurch gekennzeichnet, dass** die obere Begrenzung (20) der Stromführungskontur in der Übergangskonturkammer (11) einen strömungsoptimierten Kurvenverlauf zwischen der Einmündung (19b) des ersten Teilkanals (10b) und der Einmündung (19a) des zweiten Teilkanals (10a) aufweist.

6. Elastische Lagerbuchse nach Anspruch 4 oder Anspruch 5, **dadurch gekennzeichnet, dass** im unteren Bereich der Übergangskonturkammer (11), unter der Einmündung (19) des zweiten Teilkanals (10a) etwa vertikal ausgerichtete Längslamellen (21) angeformt sind, deren obere Verbindungslinie einer unteren Begrenzung der Stromführungskontur entspricht.

7. Elastische Lagerbuchse nach einem der Ansprüche 4 bis 6, **dadurch gekennzeichnet, dass** in der Übergangskonturkammer (11) ein strömungsleitendes Konturelement (22) nachträglich nach der Entformung formschlüssig und/oder kraftschlüssig angebracht ist.

8. Elastische Lagerbuchse nach einem der Ansprüche 4 bis 7, **dadurch gekennzeichnet, dass** im unteren Bereich der Übergangskonturkammer (11) unter der Einmündung (19a) des zweiten Teilkanals (10a) Vertiefungen eingeformt sind.

9. Elastische Lagerbuchse nach einem der Ansprüche 1 bis 8, **dadurch gekennzeichnet, dass** am Innenteil (2) mit Elastomermaterial (13) überzogene Anschläge (14) angeformt sind die radial in die Arbeitskammern (5, 6) einragen.

10. Elastische Lagerbuchse nach einem der Ansprüche 1 bis 9, **dadurch gekennzeichnet, dass** das Innenteil (2) rohrförmig oder im Querschnitt nach unten konisch verjüngt ausgebildet ist, und
dass das Innenteil (2) aus Kunststoff mit einer zentralen Bohrung (15) zur Aufnahme einer Schwenkachse hergestellt ist.

## Claims

1. Elastic bearing bush with hydraulic damping,
with an inner part (2) for connection to a first component to be mounted, and with an exterior sleeve (3),
with an elastomer body (4) between the inner part (2) and the exterior sleeve (3),
with two radially opposite working chambers (5, 6) which are filled with hydraulic fluid and are formed by associated cutouts in the exterior sleeve (3) and in the elastomer body (4) and by an exterior shell (7) which seals in a liquid-tight manner, and
with a flow passage (10a, 10b) for the flow connection of the two working chambers (5, 6),
**characterized**
**in that** an elastomer layer (9) is applied radially on the outside of the exterior sleeve (3), and the flow passage (10a, 10b) together with the passage base thereof and the passage side walls and a transition contour chamber (11) is moulded into said elastomer layer, the flow passage (10a, 10b) and the transition contour chamber (11) being delimited radially on the outside in a liquid-tight manner by the exterior shell (7), and
**in that** the flow passage consists of two sub-passages (10a, 10b), each of which respectively runs in a transverse plane laterally next to the working chambers (5, 6) in such a manner
that the first sub-passage (10b) is connected to the first working chamber (5) via a first lateral chamber output opening (18b), runs in the circumferential direction past the first working chamber (5) and the second working chamber (6) and opens into the transition contour chamber (11), and
**in that** the second sub-passage (10a) is correspondingly connected to the second working chamber (6) via a second lateral chamber output opening (19a), runs in the opposite circumferential direction past the second working chamber (6) and the first working chamber (5) and likewise opens into the transition contour chamber (11) via which a flow connection is produced in the longitudinal direction of the bush between the first sub-passage (10b) and the second sub-passage (10a).

2. Elastic bearing bush according to Claim 1, **characterized in that** the transition contour chamber (11) has a larger cross section than the sub-passages (10a, 10b) and constitutes an expansion in relation thereto, and
**in that** the transition contour chamber (11) has a flow-guiding contour (20; 21; 22) between the opening sub-passages (10a, 10b).

3. Elastic bearing bush according to Claim 1 or Claim 2, **characterized in that** the transition contour chamber (11) is designed as a cylinder cutout.

4. Elastic bearing bush according to one of Claims 1 to 3, **characterized in that** the bearing bush (1) is fitted by being pressed into a receiving eye in the second component to be mounted, with the bush axis approximately horizontal and with the working chambers (5, 6) located vertically one above the other.

5. Elastic bearing bush according to Claim 4, **characterized in that** the upper boundary (20) of the flow-guiding contour in the transition contour chamber (11) has a flow-optimized curve profile between the mouth (19b) of the first sub-passage (10b) and the mouth (19a) of the second sub-passage (10a).

6. Elastic bearing bush according to Claim 4 or Claim 5, **characterized in that** approximately vertically aligned longitudinal lamellae (21), the upper connecting line of which corresponds to a lower boundary of the flow-guiding contour, are integrally formed in the lower region of the transition contour chamber (11), under the mouth (19) of the second sub-passage (10a).

7. Elastic bearing bush according to one of Claims 4 to 6, **characterized in that** a flow-conducting contour element (22) is fitted subsequently, after removal from the mould, in the transition contour chamber (11) in a form-fitting and/or frictional manner.

8. Elastic bearing bush according to one of Claims 4 to 7, **characterized in that** depressions are formed in the lower region of the transition contour chamber (11) under the mouth (19a) of the second sub-passage (10a).

9. Elastic bearing bush according to one of Claims 1 to 8, **characterized in that** stops (14) which are covered with elastomer material (13) and project radially into the working chambers (5, 6) are integrally formed on the inner part (2).

10. Elastic bearing bush according to one of Claims 1 to 9, **characterized in that** the inner part (2) is designed in tubular form or such that it tapers conically downwards in cross section, and
**in that** the inner part (2) is produced from plastic with a central bore (15) for receiving a pivot spindle.

## Revendications

1. Coussinet élastique avec amortissement hydraulique présentant
une partie intérieure (2) destinée à la liaison avec un premier composant à loger et un tube extérieur (3),
un corps en élastomère (4) entre la partie intérieure (2) et le tube extérieur (3),
deux chambres de travail (5, 6) remplies de liquide hydraulique, radialement opposées qui sont formées par des évidements associés dans le tube extérieur (3) et dans le corps en élastomère (4) ainsi que par une douille extérieure (7) se terminant de manière étanche au liquide, et
un canal d'écoulement (10a, 10b, 11) pour la liaison d'écoulement des deux chambres de travail (5, 6),
**caractérisé en ce que**
une couche d'élastomère (9) est appliquée radialement à l'extérieur sur le tube extérieur (3), dans laquelle couche sont formés le canal d'écoulement (10a, 10b), avec son fond et ses parois latérales, ainsi qu'une chambre de contour transitoire (11), sachant que le canal d'écoulement (10a, 10b) et la chambre de contour transitoire (11) sont délimités radialement à l'extérieur par la douille extérieure (7) de manière étanche au liquide, et
le canal d'écoulement se compose de deux canaux partiels (10a, 10b), dont respectivement un canal partiel (10a, 10b) s'étend latéralement à côté des chambres de travail (5, 6) dans un plan transversal de telle manière que
le premier canal partiel (10b) est relié à la première chambre de travail (5) par une première ouverture de sortie de chambre (18b) latérale, passe à côté de la première chambre de travail (5) et de la seconde chambre de travail (6) dans le sens périphérique et débouche dans la chambre de contour transitoire (11), et
le second canal partiel (10a) est relié de manière correspondante à la seconde chambre de travail (6)) par une seconde ouverture de sortie de chambre latérale (19a), passe à côté de la seconde chambre de travail (6) et de la première chambre de travail (5) dans le sens périphérique opposé et débouche également dans la chambre de contour transitoire (11) qui établit une liaison d'écoulement dans le sens longitudinal du coussinet entre le premier canal partiel (10b) et le second canal partiel (10a).

2. Coussinet élastique selon la revendication 1, **caractérisé en ce que** la chambre de contour transitoire (11) présente une section transversale plus grande que les canaux partiels (10a, 10b) et constitue par rapport à ceux-ci un élargissement et
**en ce que** la chambre de contour transitoire (11) présente un contour de guidage d'écoulement (20 ; 21 ; 22) entre les canaux partiels débouchants (10a, 10b).

3. Coussinet élastique selon la revendication 1 ou 2, **caractérisé en ce que** la chambre de contour transitoire (11) est réalisée comme une section de cylindre.

4. Coussinet élastique selon l'une quelconque des revendications 1 à 3, **caractérisé en ce que** le coussinet (1) est installé par enfoncement dans un oeil de réception du second composant à loger avec un axe de coussinet à peu près horizontal et des chambres de travail (5, 6) verticalement superposées.

5. Coussinet élastique selon la revendication 4, **caractérisé en ce que** la délimitation supérieure (20) du contour de guidage d'écoulement dans la chambre de contour transitoire (11) présente une allure de courbe optimisée en écoulement entre l'entrée (19b) du premier canal partiel (10b) et l'entrée (19a) du second canal partiel (10a).

6. Coussinet élastique selon la revendication 4 ou 5, **caractérisé en ce que** des lamelles longitudinales (21) orientées à peu près verticalement sont formées dans la zone inférieure de la chambre de contour transitoire (11) sous l'entrée (19) du second canal partiel (10a), dont la ligne de liaison supérieure correspond à une délimitation inférieure du contour de guidage d'écoulement.

7. Coussinet élastique selon l'une quelconque des revendications 4 à 6, **caractérisé en ce qu'**un élément de contour (22) conduisant l'écoulement est monté ultérieurement positivement et/ou à force dans la chambre de contour transitoire (11) après le démoulage.

8. Coussinet élastique selon l'une quelconque des revendications 4 à 7, **caractérisé en ce que** des cavités sont moulées dans la zone inférieure de la chambre de contour transitoire (11) sous l'entrée (19a) du second canal partiel (10a).

9. Coussinet élastique selon l'une quelconque des revendications 1 à 8, **caractérisé en ce que** des butées (14) revêtues de matériau élastomère sont formées sur la partie intérieure (2), lesquelles pénètrent radialement dans les chambres de travail (5, 6).

10. Coussinet élastique selon l'une quelconque des revendications 1 à 9, **caractérisé en ce que** la partie intérieure (2) est réalisée en forme de tube ou avec une section transversale rétrécie en cône vers le bas, et
**en ce que** la partie intérieure (2) est fabriquée en plastique avec un perçage central (15) pour la réception d'un axe de pivotement.
